# EUROPEAN PATENT APPLICATION

(11) **EP 4 570 359 A1**
(43) Date of publication of application: **18.06.2025**
(21) Application number: 24217680.8
(22) Date of filing: 05.12.2024
(51) Int. Cl.: B01D 53/76, B01D 53/68

(54) **EXHAUST GAS TREATMENT APPARATUS**

(30) Priority: 11.12.2023 JP 2023208425
(71) Applicant: EBARA CORPORATION, Ota-ku, Tokyo 144-8510 (JP)
(72) Inventor: HOSOTANI, Kazumasa, Tokyo, 1448510 (JP); MIYAZAKI, Kazutomo, Tokyo, 1448510 (JP); TOMII, Takayuki, Tokyo, 1448510 (JP); NAKAMURA, Satoru, Tokyo, 1448510 (JP); MATSUSHIMA, Keisuke, Tokyo, 1448510 (JP); KYOTANI, Takashi, Tokyo, 1448510 (JP)
(74) Representative: Klang, Alexander H.

(57) **Abstract**

An exhaust gas treatment apparatus capable of eliminating an adverse effect of a processing gas is disclosed. The exhaust gas treatment apparatus includes a gas treatment reactor having a flow-path forming wall (12), and a double-pipe structure (20). The double-pipe structure (20) includes an inner cylinder (21) into which at least a part of the flow-path forming wall (12) is inserted, and an outer cylinder (22) disposed outside the inner cylinder (21).

## Description

### BACKGROUND OF THE INVENTION

### Field of the Invention:

The present invention relates to an exhaust gas treatment apparatus.

### Description of the Related Art:

A vacuum pump apparatus is widely used as one of manufacturing facilities for semiconductors, liquid crystals, solar panels, LEDs, etc. In manufacturing processes of these products, a vacuum pump is coupled to a vacuum chamber, and a processing gas that has been introduced into the vacuum chamber is evacuated by the vacuum pump.

The gas to be evacuated by the vacuum pump may contain harmful flammable gas, such as silane gas (SiH₄), dichlorosilane gas (SiH₂Cl₂), ammonia (NH₃), etc., or halogen-based persistent gas, such as NF₃, CIF₃, SF₆, CHF₃, C₂F₆, CF₄, etc. Therefore, such gas cannot be released as it is into the atmosphere.

In the vacuum pump apparatus, an abatement device (which is an example of an exhaust gas treatment apparatus) is provided downstream of the vacuum pump. This abatement device is configured to detoxify the evacuated gas. Known methods of detoxifying the gas include a wet method in which the processing gas is brought into contact with a liquid that can remove foreign matter and water-soluble components from the processing gas, and a combustion method in which the processing gas is combusted.

### Citation List

### Patent Literature

Patent document 1: Japanese laid-open patent publication No. 2008-161861
Patent document 2: Japanese laid-open patent publication No. 2017-211100

Patent Document 1 discloses a structure configured to form a swirling, spiral water film on an inner wall surface of a cylinder. An exhaust gas treatment apparatus of Patent Document 1 is configured to form the water film to thermally insulate the inner wall surface of the cylinder and wash away by-products and corrosive gas to thereby prevent damage to the inner wall surface of the cylinder.

However, if the processing gas contains a substance (e.g., dichlorosilane) that reacts with water to produce solid, the solid may grow and clog a combustion chamber when the solid adheres to a gas-liquid interface (i.e., an area that is wetted by an incomplete water film around a water supply nozzle for forming the water film). The processing gas may contain halogen gas that produces acidic water when the halogen gas is dissolved in water. In this case, the gas-liquid interface made of a metal, such as stainless steel, may be exposed to the processing gas, and as a result, the gas-liquid interface may corrode in a short period of time.

Patent Document 2 discloses a structure configured to form a swirling, spiral water film on an inner wall surface of a cylinder surrounding a combustion treatment chamber. An exhaust gas treatment apparatus of Patent Document 2 is configured to prevent the processing gas from contacting the gas-liquid interface by replacing a gas around an upper end of the water film and a surrounding atmosphere with a purge gas.

However, if the swirling flow of the processing gas in the combustion treatment chamber is intense, the water of the water film may be splashed, and the splashed water may react with the processing gas, resulting in generation of solids. If a flow rate of the purge gas is low, the processing gas may react with the water at the gas-liquid interface, resulting in generation of solids. Conversely, if the flow rate of the purge gas is too high, the water of the water film may be splashed, and the splashed water may react with the processing gas, resulting in generation of solids.

### SUMMARY OF THE INVENTION

Therefore, it is an object of the present invention to provide an exhaust gas treatment apparatus capable of eliminating an adverse effect of a processing gas.

In an embodiment, there is provided an exhaust gas treatment apparatus comprising: a gas treatment reactor having a flow-path forming wall that forms a flow path for a processing gas that has been introduced; and a double-pipe structure that surrounds the gas treatment reactor, the double-pipe structure including: an inner cylinder into which at least a part of the flow-path forming wall is inserted; and an outer cylinder disposed outside the inner cylinder.

In an embodiment, the exhaust gas treatment apparatus further comprises a liquid-film forming device configured to form a liquid film on the inner cylinder, the liquid-film forming device being configured to supply liquid to an outer gap between the outer cylinder and the inner cylinder and form the liquid film on an inner wall surface of the inner cylinder with the liquid that has overflowed the inner cylinder.

In an embodiment, the liquid-film forming device includes: a liquid supply line coupled to a liquid supply port formed in the outer cylinder; and a liquid supply source configured to supply the liquid to the outer gap through the liquid supply line.

In an embodiment, the exhaust gas treatment apparatus further comprises a purge-gas introducing device configured to introduce a purge gas into an inner gap between the inner cylinder and the flow-path forming wall, the purge-gas introducing device being configured to introduce the purge gas from above the inner cylinder.

In an embodiment, the purge-gas introducing device includes: a gas introduction line coupled to a gas introduction port located above the inner cylinder; and a gas introduction source configured to introduce the purge gas into the inner gap through the gas introduction line.

In an embodiment, a lower end of the flow-path forming wall is located at a position lower than an end of the inner cylinder.

In an embodiment, the lower end of the flow-path forming wall is lower than the end of the inner cylinder by 10 mm or more.

In an embodiment, the exhaust gas treatment apparatus further comprises a plate extending from the outer cylinder toward the flow-path forming wall and disposed above the inner cylinder.

In an embodiment, the plate has a protrusion extending from an inner end of the plate toward an end of the inner cylinder.

In an embodiment, the plate is made of a material having corrosion resistance.

In an embodiment, the outer cylinder and the inner cylinder are each made of resin or stainless steel.

Since the exhaust gas treatment apparatus has the structure in which at least a part of the flow-path forming wall of the gas treatment reactor is inserted into the inner cylinder, the processing gas passing through the flow-path forming wall does not come into contact with the gas-liquid interface outside the flow-path forming wall. Therefore, the exhaust gas treatment apparatus can prevent an adverse effect of the processing gas, such as damage to the gas-liquid interface caused by adhesion of the processing gas to the gas-liquid interface.

### BRIEF DESCRIPTION OF THE DRAWINGS

FIG. 1 is a diagram showing an embodiment of an exhaust gas treatment apparatus;
FIG. 2 is a diagram showing flow of liquid supplied to an outer gap;
FIG. 3 is a diagram showing a purge-gas introducing device;
FIG. 4 is a diagram showing another embodiment of an exhaust gas treatment apparatus;
FIG. 5 is a diagram showing another embodiment of an exhaust gas treatment apparatus;
FIG. 6 is a diagram showing another embodiment of an exhaust gas treatment apparatus; and
FIG. 7 is a diagram showing another embodiment of an exhaust gas treatment apparatus.

### DESCRIPTION OF EMBODIMENTS

Hereinafter, embodiments of the present invention will be described with reference to the drawings. In the drawings described below, the same or corresponding components are denoted by the same reference numerals, and duplicated descriptions will be omitted. In the multiple embodiments described below, configuration of one embodiment that is not particularly described is the same as other embodiments, and duplicated descriptions will be omitted.

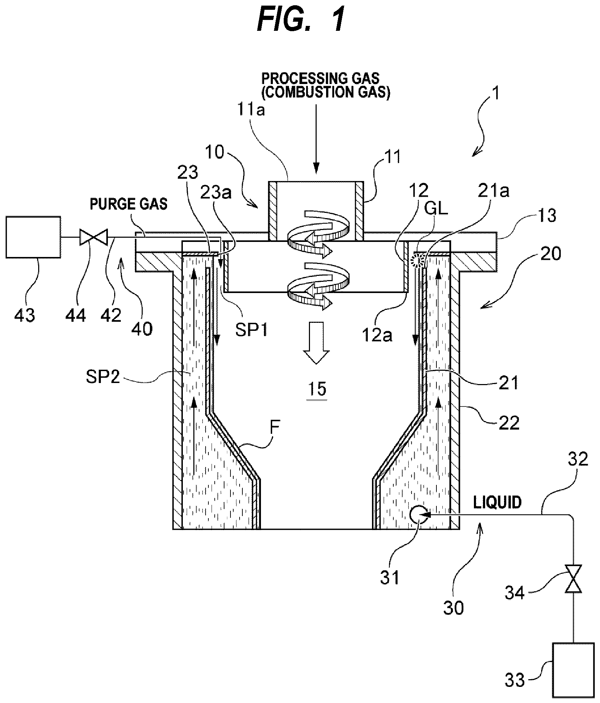

FIG. 1 is a diagram showing an embodiment of an exhaust gas treatment apparatus. An exhaust gas treatment apparatus 1 is provided to render a gas (processing gas) from a vacuum pump harmless. A vacuum pump (not shown) is coupled to a primary side (upstream side) of the exhaust gas treatment apparatus 1.

As shown in FIG. 1, the exhaust gas treatment apparatus 1 includes a gas treatment reactor 10 configured to cause a thermal treatment reaction of the processing gas, and a double-pipe structure 20 surrounding the gas treatment reactor 10. The gas treatment reactor 10 includes an inlet pipe 11 configured to introduce the processing gas, a flow-path forming wall 12 coupled to the inlet pipe 11 and forming a flow path for the introduced processing gas, and a cover member 13 configured to close an open end of the double-pipe structure 20.

The processing gas (i.e., combustion gas) combusted by a fuel gas is introduced into the gas treatment reactor 10 through an inlet opening 11a of the inlet pipe 11, and flows as a swirling flow in the double-pipe structure 20. In the embodiment shown in FIG. 1, a flame burner is used as a heat source applied to the exhaust gas treatment apparatus 1, while in one embodiment, a plasma generator or an electric heater may be used as the heat source.

The double-pipe structure 20 includes an inner cylinder 21 into which at least a part of the flow-path forming wall 12 is inserted, and an outer cylinder 22 disposed outside the inner cylinder 21. The inner cylinder 21 and the outer cylinder 22 are disposed concentrically with the gas treatment reactor 10.

The processing gas (i.e., combustion gas) forming the swirling flow along the flow-path forming wall 12 passes through a gas flow path 15 formed inside the inner cylinder 21. The processing gas is treated by a liquid tank casing (not shown) and a treatment casing (not shown), and is then discharged to the outside. The liquid tank casing is configured to store liquid and reuse the stored liquid for treatment in the exhaust gas treatment apparatus 1. The treatment casing is coupled to the liquid tank casing and is configured to further detoxify and treat the processing gas flowing from the liquid tank casing and discharge the treated processing gas.

As shown in FIG. 1, when the flow-path forming wall 12 of the gas treatment reactor 10 is inserted into the inner cylinder 21 of the double-pipe structure 20, a lower end 12a of the flow-path forming wall 12 is located at a position lower than an end (an upper end) 21a of the inner cylinder 21. Preferably, the lower end 12a of the flow-path forming wall 12 is lower than the end 21a of the inner cylinder 21 by 10 mm or more and 100 mm or less.

In the embodiment shown in FIG. 1, both the flow-path forming wall 12 and the inner cylinder 21 have a cylindrical shape. Therefore, when the flow-path forming wall 12 is inserted into the inner cylinder 21, an annular gap (i.e., an inner gap) SP1 is formed between an outer wall surface of the flow-path forming wall 12 and an inner wall surface of the inner cylinder 21. The inner gap SP1 is located outside the flow-path forming wall 12 which forms the flow path for the processing gas. The inner gap SP1 is a region that is not affected by the high-temperature processing gas as the swirling flow passing through the flow-path forming wall 12.

The exhaust gas treatment apparatus 1 includes a liquid-film forming device 30 configured to form a liquid film on the inner cylinder 21. The liquid-film forming device 30 is configured to supply liquid to an outer gap SP2 between the outer cylinder 22 and the inner cylinder 21, and form a liquid film F on the inner wall surface of the inner cylinder 21 with the liquid that has overflowed the inner cylinder 21.

More specifically, the liquid-film forming device 30 includes a liquid supply line 32 coupled to a liquid supply port 31 which is formed in the outer cylinder 22 and is in communication with the outer gap SP2, and a liquid supply source 33 configured to supply the liquid to the outer gap SP2 through the liquid supply line 32. The liquid-film forming device 30 may include an on-off valve 34 coupled to the liquid supply line 32. In the embodiment shown in FIG. 1, the single liquid supply port 31 is formed, but the number of liquid supply port 31 is not limited to this embodiment. A plurality of liquid supply ports 31 may be formed.

As shown in FIG. 1, the exhaust gas treatment apparatus 1 includes a plate 23 that extends from the inner wall surface of the outer cylinder 22 toward the flow-path forming wall 12. The plate 12 is disposed above the inner cylinder 21 (more specifically, above the end 21a of the inner cylinder 21). The plate 23 has an annular shape and is made of a corrosion-resistant material (e.g., resin).

The plate 23 is not in contact with the flow-path forming wall 12, and an inner end 23a of the plate 23 is spaced from the outer wall surface of the flow-path forming wall 12. In the embodiment shown in FIG. 1, the plate 23 is coupled to the inner wall surface of the outer cylinder 22, but may be coupled to the cover member 13. The plate 23 is a returning member for changing the flow direction of the liquid supplied to the outer gap SP2. The liquid ascending in the outer gap SP2 impinges on the plate 23. The liquid that has impinged on the plate 23 changes its direction and flows downward on the inner wall surface of the inner cylinder 21 to form a liquid film F.

As shown in FIG. 1, a gas-liquid interface GL is formed between an upper end of the liquid film F and a lower surface of the plate 23. The gas-liquid interface GL is a boundary where the liquid overflowing the outer gap SP2 comes into contact with the plate 23, and the gas-liquid interface GL is a portion that is wetted by an incomplete liquid film F.

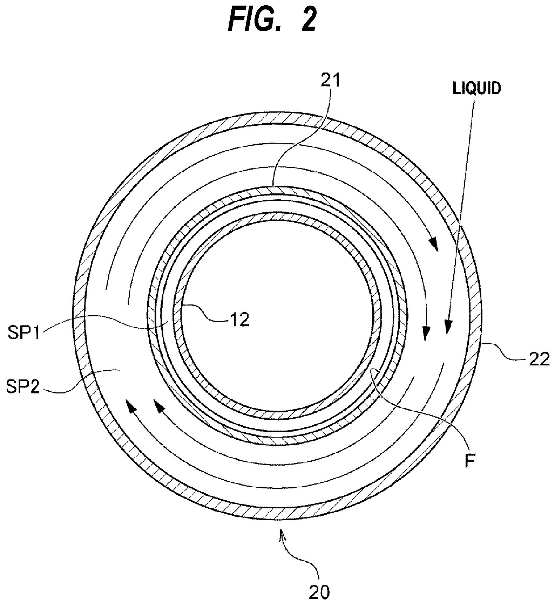

FIG. 2 is a diagram showing the flow of liquid supplied to the outer gap. As shown in FIGS. 1 and 2, the liquid supplied from the liquid supply source 33 to the outer gap SP2 through the liquid supply port 31 flows in a tangential direction of the inner cylinder 21 and swirls in the outer gap SP2. The liquid swirling in the outer gap SP2 ascends as a swirling flow until the swirling liquid comes into contact with the lower surface of the plate 23. In order to prevent the liquid that has contacted the lower surface of the plate 23 from rising up the plate 23, the flow rate of the liquid supplied to the outer gap SP2 is adjusted.

The liquid, whose flow direction has been changed by the contact with the plate 23, forms the spiral liquid film F on the inner wall surface of the inner cylinder 21. The liquid film F can prevent foreign matter, such as reaction by-products formed by the processing gas, from accumulating on the inner cylinder 21. Furthermore, since the entire inner wall surface of the inner cylinder 21 is covered with the liquid film F, the surface temperature of the inner wall surface of the inner cylinder 21 is kept relatively low. Since the temperature of the inner cylinder 21 can be low, each of the inner cylinder 21 and the outer cylinder 22 may be made not only of an inexpensive metal, such as stainless steel, but also of a resin (e.g., polyvinyl chloride (PVC), polypropylene (PP), etc.) that has excellent corrosion resistance and is cheaper than stainless steel.

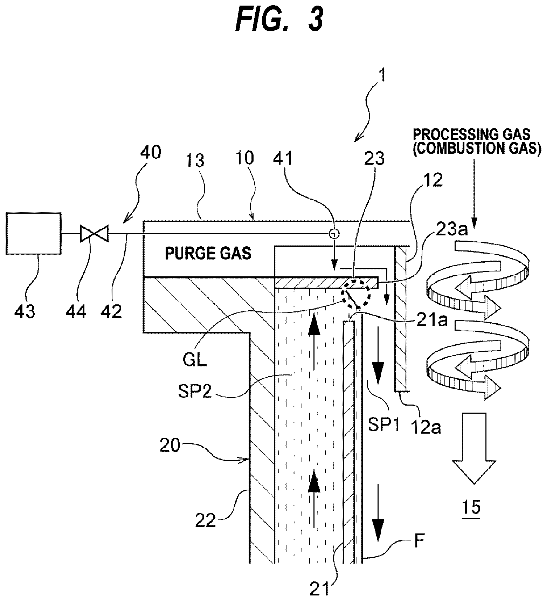

FIG. 3 is a diagram showing a purge-gas introducing device. As shown in FIGS. 1 and 3, the exhaust gas treatment apparatus 1 includes a purge-gas introducing device 40 configured to introduce a purge gas into the inner gap SP1 between the inner cylinder 21 and the flow-path forming wall 12. The purge-gas introducing device 40 is configured to introduce the purge gas from above the inner cylinder 21.

More specifically, the purge-gas introducing device 40 includes a gas introduction line 42 coupled to a gas introduction port 41 located above the inner cylinder 21, and a gas introduction source 43 configured to introduce the purge gas into the inner gap SP1 through the gas introduction line 42. The purge-gas introducing device 40 may include an on-off valve 44 coupled to the gas introduction line 42.

In the embodiment shown in FIG. 3, the gas introduction port 41 is formed in the cover member 13 of the gas treatment reactor 10, while the gas introduction port 41 does not necessarily have to be formed in the cover member 13 as long as the purge gas can be introduced toward an upper end and its adjacent portion of the liquid film F. In one embodiment, the gas introduction port 41 may be formed in the outer cylinder 22.

An example of the purge gas includes air or nitrogen gas. In one embodiment, the most desirable purge gas can be selected in consideration of factors, such as performance and efficiency of the exhaust gas treatment apparatus 1 based on compositions of the processing gas.

In the embodiment shown in FIG. 3, the single gas introduction port 41 is formed, but the number of gas introduction port 41 is not limited to this embodiment. In one embodiment, a plurality of gas introduction ports 41 may be formed. As shown in FIG. 3, the gas introduction port 41 is located at a position higher than the upper end of the liquid film F (more specifically, above the plate 23). The purge-gas introducing device 40 introduces the purge gas into the inner gap SP1 through the gas introduction line 42 and the gas introduction port 41 by driving the gas introduction source 43. The purge gas that has been introduced into the inner gap SP1 flows through the inner gap SP1 into the gas flow path 15.

The purge-gas introducing device 40 can more reliably prevent the processing gas from contacting the gas-liquid interface GL by replacing the atmosphere around the upper end of the liquid film F with the purge gas. Therefore, the purge-gas introducing device 40 can prevent the generation of solids due to reaction between the processing gas and the liquid around the gas-liquid interface GL.

The purge-gas introducing device 40 can prevent the high-temperature processing gas from diffusing around the gas-liquid interface GL by supplying the purge gas from above the plate 23. With this configuration, the plate 23 can be made of a resin (e.g., polyvinyl chloride (PVC), polypropylene (PP), etc.) that is significantly cheaper than corrosion-resistant materials (e.g., Inconel and Hastelloy) and PFA-coated materials. Since the resin has high corrosion resistance, even if the liquid that forms the liquid film F is acidic, long-term maintenance of the exhaust gas treatment apparatus 1 is not required.

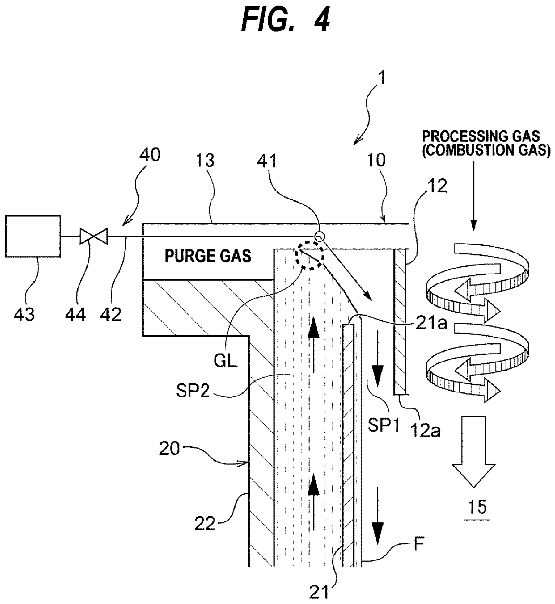

FIG. 4 is a diagram showing another embodiment of the exhaust gas treatment apparatus. In the embodiment shown in FIG. 4, the exhaust gas treatment apparatus 1 does not include the plate 23. Since the plate 23 is not disposed, the liquid ascending in the outer gap SP2 impinges on the cover member 13. The liquid that has impinged on the cover member 13 changes its direction and flows downward on the inner wall surface of the inner cylinder 21 to form a liquid film F. As shown in FIG. 4, a gas-liquid interface GL is formed between the upper end of the liquid film F and the lower surface of the cover member 13.

In the present embodiment as well, the purge-gas introducing device 40 replaces the atmosphere around the upper end of the liquid film F with the purge gas, thereby more reliably preventing the processing gas from contacting the gas-liquid interface GL.

According to the above-described embodiments, the exhaust gas treatment apparatus 1 has the structure in which at least a part of the flow-path forming wall 12 is inserted into the inner cylinder 21, so that the processing gas passing through the flow-path forming wall 12 does not come into contact with the gas-liquid interface GL which is located outside the flow-path forming wall 12 (see FIG. 1). Therefore, the exhaust gas treatment apparatus 1 can prevent damage to the gas-liquid interface GL caused by adhesion of the processing gas to the gas-liquid interface GL.

The exhaust gas treatment apparatus 1 has the structure in which the gas-liquid interface GL is located outside the flow-path forming wall 12, and can therefore prevent the gas-liquid interface GL from being directly exposed to the swirling flow of the processing gas. Therefore, even if the processing gas swirls vigorously, the risk of liquid being splashed from the gas-liquid interface GL and the liquid film F around it due to the processing gas can be reduced compared to conventional techniques (e.g., Patent Documents 1 and 2).

In the conventional technology, by-products on an inner wall of a burner may fall onto an inner wall of a combustion treatment chamber. As a result, a liquid film on the inner wall of the combustion treatment chamber may be broken. A part of the inner wall where the liquid film is broken (gas-liquid interface) is exposed to high-temperature combustion gas containing acidic components, and a hole may be formed in the inner wall due to pitting corrosion in a short period of time.

According to the above-discussed embodiments, even if a hole is formed in the inner cylinder 21, the region outside the inner cylinder 21 (i.e., the outer gap SP2) is always filled with the liquid for the liquid film F. Therefore, even if a hole is formed in the inner cylinder 21, the liquid flowing in the outer gap SP2 flows out through the hole formed in the inner cylinder 21, so that the risk of serious damage to the inner cylinder 21 can be low. Furthermore, even if the inner cylinder 21 corrodes due to the pitting corrosion, the inside of the outer cylinder 22 is always filled with the liquid, so that there is a low risk of corrosion of the inner wall surface of the outer cylinder 22. In this manner, the exhaust gas treatment apparatus 1 having the configuration according to the embodiments has a high level of safety against gas leakage and liquid leakage compared to conventional exhaust gas treatment apparatuses.

If the inner cylinder 21 is significantly damaged, the liquid flowing in the outer gap SP2 will flow out through the damaged portion into the gas flow path 15, and therefore the ascending of the liquid could be hindered. As a result, the inner wall surface of the outer cylinder 22 may be exposed to the high-temperature processing gas, and the temperature of the outer cylinder 22 may rise rapidly. Therefore, the exhaust gas treatment apparatus 1 may include a temperature sensor configured to measure the surface temperature of the outer cylinder 22. With such a configuration, an operator can constantly monitor the surface temperature of the outer cylinder 22 and can check an abnormal state before a serious failure, such as a gas leak or a liquid leak occurs.

In the conventional technology, a combustion treatment chamber has a structure in which metals, such as stainless steel, are welded together to improve heat resistance and corrosion resistance. However, it is known that the corrosion resistance of the welded portion of the combustion treatment chamber is lowered due to sensitization. Therefore, corrosion may be started from the welded portion of the combustion treatment chamber exposed to acid gas or acid water.

According to this embodiment, the outer cylinder 22 having the welded portion is disposed outside the gas treatment reactor 10 with the inner cylinder 21 existing between the outer cylinder 22 and the gas treatment reactor 10, so that the outer cylinder 22 is disposed at a distance from the gas treatment reactor 10. Therefore, the risk of corrosion of the welded portion of the outer cylinder 22 due to sensitization can be significantly reduced.

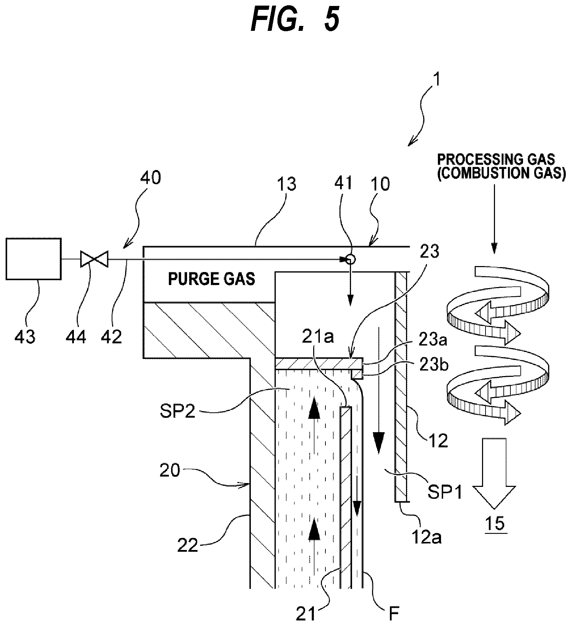

FIG. 5 is a diagram showing another embodiment of the exhaust gas treatment apparatus. In the embodiment shown in FIG. 5, the exhaust gas treatment apparatus 1 includes the plate 23 having a protrusion 23b. More specifically, the plate 23 has the protrusion 23b extending from the inner end 23a of the plate 23 toward the end 21a of the inner cylinder 21.

In the embodiment shown in FIG. 5, the downwardly extending protrusion 23b has an annular shape. The protrusion 23b prevents the liquid that has impinged on the plate 23 from rising up the plate 23. The rising up of the liquid that has impinged on the plate 23 from the plate 23 is restricted by the protrusion 23b. Therefore, the flow direction of the liquid that has impinged on the plate 23 is determined to be the downward direction by the protrusion 23b.

If the liquid ascending in the outer gap SP2 rises up the plate 23, the liquid with an appropriate flow rate will not flow downward on the inner cylinder 21, and as a result, the liquid film F may not be properly formed. Therefore, in this case, it is necessary to precisely control the flow rate of the liquid so that the liquid film F is properly formed. According to this embodiment, the protrusion 23b can prevent the liquid from rising up the plate 23, so that the liquid film F can be reliably formed without the need to precisely control the flow rate of the liquid.

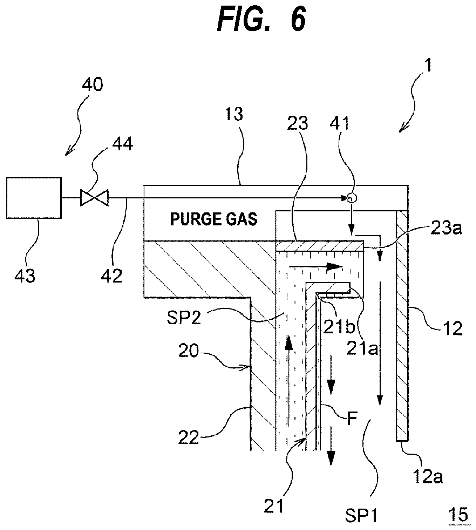

FIG. 6 is a diagram showing another embodiment of the exhaust gas treatment apparatus. In the embodiment shown in FIG. 6, the inner cylinder 21 has a shape that is bent at a right angle. More specifically, the inner cylinder 21 has a bent portion 21b, and is bent inward at the bent portion 21b. In other words, the bent portion 21b is bent toward the flow-path forming wall 12. With such a shape, the end 21a of the inner cylinder 21 faces the flow-path forming wall 12.

As described above, the liquid, whose flow direction has been changed by the contact with the plate 23, forms the spiral liquid film F on the inner wall surface of the inner cylinder 21. Therefore, while the inner cylinder 21 has the right-angled shape, the spiral liquid film F reliably flows downward on the inner cylinder 21 without peeling off from the inner cylinder 21.

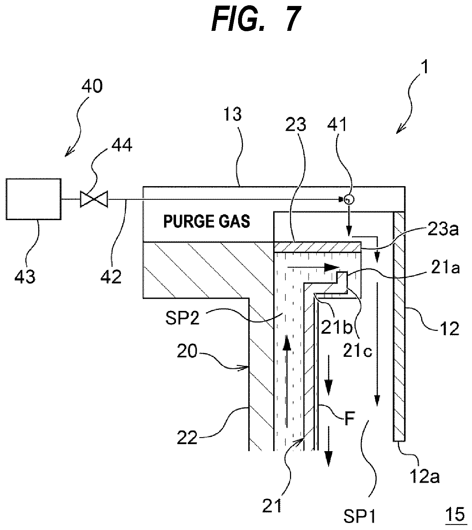

FIG. 7 is a diagram showing another embodiment of the exhaust gas treatment apparatus. In the embodiment shown in FIG. 7, the inner cylinder 21 has a plurality of bent portions 21b, 21c. The inner cylinder 21 is bent inward (i.e., toward the flow-path forming wall 12) at the bend portion 21b, and further bent at the bend portion 21c in a direction perpendicular to the bend portion 21b (i.e., parallel to the flow-path forming wall 12 (and the outer cylinder 22)). With this shape, the end 21a of the inner cylinder 21 faces the plate 23, and the bent portion 21c faces the flow-path forming wall 12.

In the embodiment shown in FIG. 7, since the end 21a of the inner cylinder 21 faces the plate 23, the inner cylinder 21 has a portion (i.e., a portion between the end 21a and the bent portion 21c) that extends parallel to the flow-path forming wall 12 (and the outer cylinder 22). Such a portion allows the inner gap SP1 to have a certain height (distance). As a result, the purge-gas introducing device 40 can more stably replace the atmosphere around the upper end of the liquid film F with the purge gas, and can more reliably prevent the processing gas from coming into contact with the gas-liquid interface.

Although the embodiments of the present invention have been described above, the present invention is not limited to the above embodiments, and various modifications are possible within the scope of the technical concept described in the claims.

## Claims

1. An exhaust gas treatment apparatus comprising:
a gas treatment reactor having a flow-path forming wall that forms a flow path for a processing gas that has been introduced; and
a double-pipe structure that surrounds the gas treatment reactor, the double-pipe structure including:
an inner cylinder into which at least a part of the flow-path forming wall is inserted; and
an outer cylinder disposed outside the inner cylinder.

2. The exhaust gas treatment apparatus according to claim 1, further comprising a liquid-film forming device configured to form a liquid film on the inner cylinder, the liquid-film forming device being configured to supply liquid to an outer gap between the outer cylinder and the inner cylinder and form the liquid film on an inner wall surface of the inner cylinder with the liquid that has overflowed the inner cylinder.

3. The exhaust gas treatment apparatus according to claim 2, wherein the liquid-film forming device includes:
a liquid supply line coupled to a liquid supply port formed in the outer cylinder; and
a liquid supply source configured to supply the liquid to the outer gap through the liquid supply line.

4. The exhaust gas treatment apparatus according to claim 1, further comprising a purge-gas introducing device configured to introduce a purge gas into an inner gap between the inner cylinder and the flow-path forming wall, the purge-gas introducing device being configured to introduce the purge gas from above the inner cylinder.

5. The exhaust gas treatment apparatus according to claim 4, wherein the purge-gas introducing device includes:
a gas introduction line coupled to a gas introduction port located above the inner cylinder; and
a gas introduction source configured to introduce the purge gas into the inner gap through the gas introduction line.

6. The exhaust gas treatment apparatus according to claim 1, wherein a lower end of the flow-path forming wall is located at a position lower than an end of the inner cylinder.

7. The exhaust gas treatment apparatus according to claim 6, wherein the lower end of the flow-path forming wall is lower than the end of the inner cylinder by 10 mm or more.

8. The exhaust gas treatment apparatus according to claim 1, further comprising a plate extending from the outer cylinder toward the flow-path forming wall and disposed above the inner cylinder.

9. The exhaust gas treatment apparatus according to claim 8, wherein the plate has a protrusion extending from an inner end of the plate toward an end of the inner cylinder.

10. The exhaust gas treatment apparatus according to claim 8, wherein the plate is made of a material having corrosion resistance.

11. The exhaust gas treatment apparatus according to claim 1, wherein the outer cylinder and the inner cylinder are each made of resin or stainless steel.
